# EUROPÄISCHE PATENTSCHRIFT

(11) **EP 2 132 265 B1**
(45) Veröffentlichungstag und Bekanntmachung des Hinweises auf die Patenterteilung: **13.04.2011**
(21) Anmeldenummer: 08717113.8
(22) Anmeldetag: 26.02.2008
(51) Int. Cl.: C08L 67/04

(54) **POLYESTERMISCHUNG ENTHALTEND BIODIESEL**
POLYESTER MIXTURE COMPRISING BIODIESEL
MÉLANGE POLYESTER CONTENANT DU BIODIESEL

(30) Priorität: 01.03.2007 EP 07103323
(43) Veröffentlichungstag der Anmeldung: 16.12.2009
(73) Patentinhaber: BASF SE, 67056 Ludwigshafen (DE)
(72) Erfinder: SCHERZER, Dietrich, 67433 Neustadt (DE); YAMAMOTO, Motonori, 68199 Mannheim (DE); SKUPIN, Gabriel, 67346 Speyer (DE)
(86) Internationale Anmeldenummer: PCT/EP2008/052279
(87) Internationale Veröffentlichungsnummer: WO 2008/104526

(56) Entgegenhaltungen:
- WO-A-02/085983
- WO-A-2006/074815
- WO-A-2007/047844
- DE-A1-102005 031 945
- US-A1- 2004 068 058
- DATABASE WPI Week 200327 Derwent Publications Ltd., London, GB; AN 2003-271089 XP002481005 -& JP 2002 327107 A (UNITIKA LTD) 15. November 2002 (2002-11-15)

## Beschreibung

Die vorliegende Erfindung betrifft biologisch abbaubare Polyestermischungen, enthaltend
i) 95 bis 99,95 Gew.-%, bezogen auf das Gesamtgewicht der Komponenten i bis ii, mindestens eines biologisch abbaubaren Homo- oder Copolyester ausgewählt aus der Gruppe: Polylactid, Polycaprolacton, Polyhydroxyalkanoat und Polyester aus aliphatischen oder aliphatischen und aromatischen Dicarbonsäuren und aliphatischen Dihydroxyverbindung und
ii) 0,05 bis 5 Gew.-%, bezogen auf das Gesamtgewicht der Komponenten i bis ii, Biodiesel.

Weiterhin betrifft die vorliegende Erfindung Verfahren zur Herstellung der erfindungsgemäßen Polyestermischungen, die Verwendung der erfindungsgemäßen Polyestermischungen zur Herstellung von Formteilen, Folien oder Fasern sowie Formteile, Folien oder Fasern umfassend die erfindungsgemäßen Polyestermischungen.

Biologisch abbaubare Polyester i bzw. Polyestermischungen aus ia) Polyestern, aus aliphatischen oder aliphatischen und aromatischen Dicarbonsäuren und aliphatischen Diolen, und/oder Polylactidund ib) -Polyhydroxybutyraten sind bekannt (siehe EP-B 792 309). Solche Mischungen vereinigen idealerweise die wünschenswerten Eigenschaften der Einzelkomponenten, beispielsweise die in der Regel guten Verarbeitungs- und mechanischen Eigenschaften der synthetischen Polyester ia mit der üblicherweise kostengünstigeren Verfügbarkeit und ökologisch unbedenklichen Herstellung und Entsorgung der Polyhydroxybutyrate ib.

In der Praxis kann das Eigenschaftsprofil der bekannten Polyester i und Mischungen ia/ib nicht immer überzeugen. Die meisten Biopolymere wie Polylactid und Polyhydroxyalkanoate weisen ein klebriges, hochviskoses Verhalten auf. Bei der Verarbeitung wird dadurch ein hoher Energieeintrag notwendig. Ein Molekulargewichtsabbau der z. Teil temperaturempfindlichen Biopolymere ist die direkte Folge. Weiterhin führt bei der Folienherstellung das Verkleben der Walze zu Produktionsausfällen. Insbesondere dünne Folien, die in der Verpackungsindustrie üblich sind, lassen sich auf diese Weise nicht wirtschaftlich herstellen.

Der vorliegenden Erfindung liegt somit die Aufgabe zugrunde, biologisch abbaubare Polyestermischungen zur Verfügung zu stellen, die die obengenannten Nachteile nicht aufweisen.

Diese Aufgabe wird von den eingangs definierten biologisch abbaubaren Polyestermischungen, die im folgenden näher beschrieben sind, erfüllt. Die erfindungsgemäßen Polyestermischungen unterscheiden sich von denjenigen des Standes der Technik durch den Zusatz von Biodiesel (Komponente ii). Biodiesel zeigt in den Polyestern i eine ausgezeichnete Gleitmittelwirkung, die die Wirkung üblicher Gleitmittel wie Calciumstearat und Erucamid noch übertrifft. Des weiteren wird die Viskosität der Polymermischungen reduziert und die Klebewirkung verringert. In Tabelle 1 sind die Eigenschaften der erfindungsgemäßen Mischungen mit denjenigen des Standes der Technik verglichen.

Unter Biodiesel werden Ester insbesondere Methylester von Fettsäuren und Pflanzenölen verstanden. Beispielsweise wird unter Biodiesel methyliertes Rapsöl verstanden. Aber auch aus anderen Pflanzenöle wie Sojaöl, Sonnenblumenöl und Palmöl kann Biodiesel hergestellt werden. Die Herstellung von Biodiesel ist beispielsweise in chemie Ingenieur Technik (75), S. 787 bis 791 und in Bioresource Technology 70 (1999), Seiten 1 bis 15 beschrieben.

In den erfindungsgemäßen Polyestermischungen sind 0,05 bis 5 Gew.-%, vorzugsweise 0,1 bis 2 Gew.-% und insbesondere bevorzugt 0,1 bis 1 Gew.-% Biodiesel bezogen auf die Komponenten i und ii enthalten.

Unter teilaromatischen Polyestern sollen erfindungsgemäß auch Polyesterderivate verstanden werden wie Polyetherester, Polyesteramide oder Polyetheresteramide. Zu den geeigneten teilaromatischen Polyestern gehören lineare nicht kettenverlängerte Polyester (WO 92/09654). Bevorzugt werden kettenverlängerte und/oder verzweigte teilaromatische Polyester. Letztere sind aus den eingangs genannten Schriften, WO 96/15173 bis 15176, WO 96/21689 bis 21692, WO 96/25446, WO 96/25448 oder der WO 98/12242, bekannt, auf die ausdrücklich Bezug genommen wird. Mischungen unterschiedlicher teilaromatischer Polyester kommen ebenso in Betracht. Insbesondere sind unter teilaromatischen Polyestern Produkte wie Ecoflex^{®} (BASF Aktiengesellschaft) und Eastar^{®} Bio (Novamont) zu verstehen.

Zu den besonders bevorzugten teilaromatischen Polyestern zählen Polyester, die als wesentliche Komponenten
A) eine Säurekomponente aus
   a1) 30 bis 99 mol-% mindestens einer aliphatischen oder mindestens einer cycloaliphatischen Dicarbonsäure oder deren esterbildende Derivate oder Mischungen davon
   a2) 1 bis 70 mol-% mindestens einer aromatischen Dicarbonsäure oder deren esterbildendem Derivat oder Mischungen davon und
   a3) 0 bis 5 mol-% einer sulfonatgruppenhaltigen Verbindung,
B) eine Diolkomponente ausgewählt aus mindestens einem C₂-bis C₁₂-Alkandiol und mindestens einem C₅- bis C₁₀-Cycloalkandiol oder Mischungen davon
   und gewünschtenfalls darüber hinaus eine oder mehrere Komponenten ausgewählt aus
C) einer Komponente ausgewählt aus
   c1) mindestens einer Etherfunktionen enthaltenden Dihydroxyverbindung der Formel I

      HO-[(CH₂)ₙ-O]ₘ-H (I)

      in der n für 2, 3 oder 4 und m für eine ganze Zahl von 2 bis 250 stehen
   c2) mindestens einer Hydroxycarbonsäure oder Formel IIa oder lib 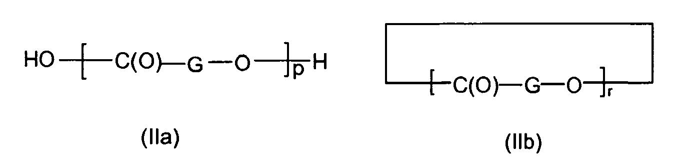 in der p eine ganze Zahl von 1 bis 1500 und r eine ganze Zahl von 1 bis 4 bedeuten, und G für einen Rest steht, der ausgewählt ist aus der Gruppe bestehend aus Phenylen, -(CH₂)_{q}-, wobei q eine ganze Zahl von 1 bis 5 bedeutet, -C(R)H- und -C(R)HCH₂, wobei R für Methyl oder Ethyl steht
   c3) mindestens einem Amino C₂- bis C₁₂-alkanol oder mindestens einem Amino-C₅-bis C₁₀-cycloalkanol oder Mischungen davon
   c4) mindestens einem Diamino-C₁-bis C₈-Alkan
   c5) mindestens einem 2,2'-Bisoxazolins der allgemeinen Formel III 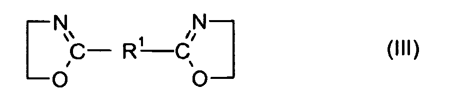 wobei R¹ eine Einfachbindung, eine (CH₂)_{z}-Alkylengruppe, mit z = 2, 3 oder 4, oder eine Phenylengruppe bedeutet
   c6) mindestens einer Aminocarbonsäure ausgewählt aus der Gruppe, bestehend aus den natürlichen Aminosäuren, Polyamiden, erhältlich durch Polykondensation einer Dicarbonsäure mit 4 bis 6 C-Atomen und einem Diamin mit 4 bis 10 C-Atomen, Verbindungen der Formeln IV a und Ivb 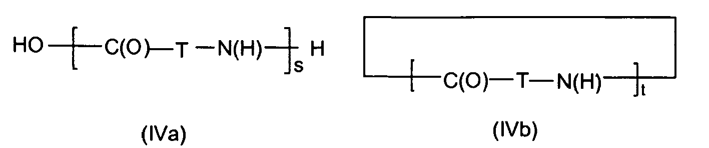 in der s eine ganze Zahl von 1 bis 1500 und t eine ganze Zahl von 1 bis 4 bedeuten, und T für einen Rest steht, der ausgewählt ist aus der Gruppe bestehend aus Phenylen, -(CH₂)ᵤ-, wobei u eine ganze Zahl von 1 bis 12 bedeutet, -C(R²)H- und -C(R²)HCH₂, wobei R² für Methyl oder Ethyl steht,
      und Polyoxazolinen mit der wiederkehrenden Einheit V 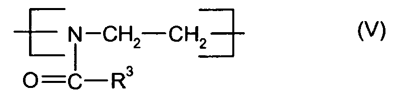 in der R³ für Wasserstoff, C₁-C₆-Alkyl, C₅-C₈-Cycloalkyl, unsubstituierten oder mit C₁-C₄-Alkylgruppen bis zu dreifach substituiertes Phenyl oder für Tetrahydrofuryl steht,
      oder Mischungen aus c1 bis c6
      und
D) einer Komponente ausgewählt aus
   d1) mindestens einer Verbindung mit mindestens drei zur Esterbildung befähigten Gruppen,
   d2) mindestens eines Isocyanates
   d3) mindestens eines Divinylethers
oder Mischungen aus d1) bis d3) enthalten.

Als Komponente a1 werden bevorzugt Bernsteinsäure, Adipinsäure, Azelainsäure, Sebacinsaüre, Brassylsäure oder deren jeweilige esterbildenden Derivate oder Mischungen davon eingesetzt. Besonders bevorzugt wird Bernsteinsäure, Adipinsäure oder Sebacinsäure oder deren jeweilige esterbildenden Derivate oder Mischungen davon eingesetzt. Besonders bevorzugt wird Adipinsäure oder deren esterbildende Derivate, wie deren Alkylester oder deren Mischungen eingesetzt. Als aliphatische Dicarbonsäure werden Sebacinsäure oder Mischungen von Sebacinsäure mit Adipinsäure bevorzugt eingesetzt, wenn Polymermischungen mit "harten" bzw. "spröden" Komponenten ib wie Polyhydroxybutyrat hergestellt werden. Als aliphatische Dicarbonsäure werden Bernsteinsäure oder Mischungen von Bernsteinsäure mit Adipinsäure bevorzugt eingesetzt, wenn Polymermischungen mit "weichen" bzw. "zähen" Komponenten ib wie beispielsweise Polyhydroxybuyratcovaleriat hergestellt werden.

Bernsteinsäure, Azelainsäure, Sebacinsäure und Brassylsäure haben zudem den Vorteil dass sie als nachwachsende Rohstoffe zugänglich sind.

Die aromatischen Dicarbonsäuren oder deren esterbildende Derivate a2 können einzeln oder als Gemisch aus zwei oder mehr davon eingesetzt werden. Besonders bevorzugt wird Terephthalsäure oder deren esterbildende Derivate wie Dimethylterephthalat, verwendet.

Die genannten teilaromatischen Polyester und die erfindungsgemäßen Polyestermischungen sind in der Regel biologisch abbaubar.

Im Sinne der vorliegenden Erfindung ist das Merkmal "biologisch abbaubar" für einen Stoff oder ein Stoffgemisch dann erfüllt, wenn dieser Stoff oder das Stoffgemisch in mindestens einem der drei in DIN V 54900-2 (Vornorm, Stand September 1998) definierten Verfahren einen prozentualen Grad des biologischen Abbaus von mindestens 60% aufweist.

Neben den oben beschriebenen Polyestern aus aliphatischen Dicarbonsäuren und aliphatischen Diolen, bzw. teilaromatischen Dicarbonsäuren sind als Komponente i die folgenden Biopolymere geeignet: Polylactid, Polycaprolacton, Polyhydroxyalkanoate und geeignet. Bevorzugte Komponeneten ii sind Polylactid (PLA) und Polyhydroxyalkanoate, und hier insbesondere Polyhydroxybutyrat (PHB) Polyhydroxybutyrate covaleriat (PHBV). Insbesondere sind Produkte wie NatureWorks® (Polylaktid der Fa. Cargill Dow), Biocycle® (Polyhydroxybutyrat der Fa. PHB Ind.); Enmat® (Polyhydroxybutyrate covaleriat der Fa. Tianan) umfasst.

Eine bevorzugte Ausführungsform der vorliegenden Erfindung betrifft Polyestermischungen nach Anspruch 1, wobei die Komponente i sich wie folgt zusammensetzt:
ia) 90 bis 99,9 Gew.-%, bezogen auf Komponenten i, eines Polyester aus aliphatischen oder aliphatischen und aromatischen Dicarbonsäuren und aliphatischen Dihydroxyverbindungen oder eines Polylactids und
ib) 0,1 bis 10 Gew.-%, bezogen auf Komponenten i, eines Polyhydroxybutyrats.

Biodiesel hat die unangenehme Eigenschaft, dass es an die Oberfläche beispielsweise einer Folie migrieren kann. Dies kann schließlich zu einem sogenannten Ausschwitzen des Biodiesels und zu einer verringerten Gleitmittelwirkung führen.

Überraschenderweise wurde nun gefunden, dass der Zusatz von Polyhydroxybutyraten wie beispielsweise Enmat® der Fa. Tianan-oder Biocycle® der Fa. PHB Industrials das Ausschwitzen des Biodiesels zurückgedrängt bzw. vollständig vermieden werden kann.

In der Regel genügt es 0,1 bis 20 Gew.-%, vorzugsweise 0,1 bis 10 Gew.-% und insbesondere bevorzugt 0,1 bis 5 Gew.-% des Polyhydroxybutyrats - bezogen auf die Komponente i - zuzugeben. Die Gleitmittelwirkung des Biodiesels lässt sich auf diese Weise nochmals deutlich steigern.

Für die Herstellung von extrudierten Thermoplasten wie beispielsweise Folien ist die Blasenstabilität von großer Bedeutung. Es wurde nun gefunden, dass Mischungen, in denen Komponente ia eine vorzugsweise kontinuierliche Phase oder zumindest kokontinuierliche Phase ausbildet und Komponente ib in separaten Bereichen in diese Phase eingebettet ist, gute Blasenstabilität aufweisen. Damit Komponente ia eine kontinuierliche Phase ausbildet, weisen die Mischungen in der Regel mehr als 40 Gew.-% an Komponente la auf.

Die erfindungsgemäßen biologisch abbaubaren Polyestermischungen können weitere dem Fachmann bekannte, aber nicht erfindungswesentliche Inhaltsstoffe enthalten. Beispielsweise die in der Kunststofftechnik üblichen Zusatzstoffe wie Stabilisatoren, Neutralisationsmittel, Gleit- und Trennmittel, Antiblockmittel, Farbstoffe oder Füllstoffe.

Zusätzlich zu den üblichen Additiven können die Polyestermischungen Kompatibilizer wie beispielsweise Epoxidgruppen-haltiges Copolymer auf Basis Styrol, Acrylsäureester und/oder Methacrylsäureester, ein Bisphenol-A-Epoxids oder ein Epoxidgruppen-haltiges natürliches Öls, Fettsäureester oder Fettsäureamid als Komponente iii enthalten.

Vorzugsweise wird eines Epoxidgruppen-haltigen Copolymers auf Basis Styrol, Acrylsäureester und/oder Methacrylsäureester eingesetzt. In der Regel weisen die Verbindungen zwei oder mehr Epoxidgruppen im Molekül auf. Insbesondere geeignet sind oligomere oder polymere epoxidierte Verbindungen, beispielsweise Di- oder Polyglycidester von Di- oder Polycarbonsäuren oder Di- oder Polyglycidether von Di- oder Polyolen, oder Copolymere aus Styrol und Glycidyl(meth)acrylaten, wie sie beispielsweise von Fa. Johnson Polymer unter der Marke Joncryl^{®} ADR 4368 vertrieben werden. Weitere bevorzugte Komponenten iii sind Verbindungen, die mindestens eine Kohlenstoff-Kohlenstoff-Doppel- oder -Dreifachbindung und mindestens eine Epoxidgruppe im Molekül enthalten. Insbesondere geeignet sind Glycidylacrylat- und Glycidylmethacrylat-haltige Polymere.

Komponente iii) wird in 0,1 bis 15 Gew.-%, bevorzugt in 0,1 bis 10 Gew.-%, und besonders bevorzugt in 0,5 bis 2 Gew.-%, bezogen auf das Gesamtgewicht der Komponenten i bis ii), eingesetzt.

Die Herstellung der erfindungsgemäßen biologisch abbaubaren Polyestermischungen aus den einzelnen Komponenten kann nach bekannten Verfahren erfolgen (EP 792 309 und US 5,883,199).

Beispielsweise können alle Komponenten ia, ib und ii in einem Verfahrensschritt in dem Fachmann bekannten Mischvorrichtungen, beispielsweise Knetern oder Extrudern bei erhöhten Temperaturen, beispielsweise von 120°C bis 200°C, gemischt und zur Reaktion gebracht werden.

Darüber hinaus wurde ein verbessertes Verfahren zur Herstellung der bevorzugten Polyestermischungen gefunden.

Hierzu wird in einem ersten Schritt 20 bis 55 Gew.-% Komponente ia mit 20 bis 55 Gew.-% Komponente ib und 15 - 25 Gew.-% Komponente ii zu einem Masterbatch bei Temperaturen von im Bereich von 110 bis 145 °C gemischt und, in einem zweiten Schritt, diesem Masterbatch Komponente ia bzw. ib zugemischt werden und die erhaltene Mischung aus den Komponenten ia, ib und iii bei Temperaturen von 130 bis 200°C zur Reaktion gebracht

Die Temperaturen im Compoundierungsschritt lassen sich in der Regel senken und damit Zersetzungen empfindlicher Biopolymere wie Polyhydroxybutyrate vermeiden, indem ein Aktivator ausgewählt aus der Gruppe bestehend aus: Zink, Zinn, Titanverbindung und C₁-C₁₂-Alkyltriphenylphosphonium-halogenid eingesetzt wird.

Die erfindungsgemäßen Polyestermischungen sind besonders zur Herstellung von, Formteilen, Folien oder Fasern geeignet. Die Herstellung kann nach dem Fachmann bekannten Methoden erfolgen.

Ein besonderes Anwendungsgebiet der biologisch abbaubaren Polyestermischungen mit verbesserten Abbauraten betrifft die Verwendung zur Herstellung von Folien, insbesondere Mulchfolien für die Agrarwirtschaft. Solche Mulchfolien werden zum Schutz und zur Wachstumsbeschleunigung meist junger Setzlinge auf landwirtschaftlichen Flächen ausgebracht. Nach der Ernte werden diese Mulchfolien auf der landwirtschaftlichen Fläche belassen oder - bei biologisch abbaubaren Mulchfolien - untergepflügt. Bis zum Beginn der nächstjährigen Aussaat ist ein weitgehender biologische Abbau dieser Mulchfolien notwendig

Mit Hilfe der erfindungsgemäßen biologisch abbaubaren Polyestermischungen werden biologisch abbaubare Polymermischungen erhalten, die sich problemlos (blasenstabil) zu durchstoßfesten Folien verarbeiten lassen.

### Beispiele

### Einsatzstoffe

Komponente ia): Ecoflex® F BX 7011 (BASF Aktiengesellschft) NatureWorks® 4042 D (NatureWorks)
Komponete ib) Biocycle® PHB 94 (PHB Industrial S/a Inc.
Komponente ii) Biodiesel (ADM)

### I. Verzweigerbatches

B1: 32% Ecoflex, 20% Biodiesel, 48% PHB
B2: 50% Ecoflex, 20% Biodiesel, 30% PHB
B3: 32% Ecoflex, 20% Biodiesel, 48% PLA
B4: 32% Ecoflex, 20% Biodiesel, 48% Polycaprolacton
B5: 80% Ecoflex, 20% Biodiesel
VB6: 80% Ecoflex, 20% Erucamide
VB7: 80% Ecoflex, 20% Calciumstearat

### II: Herstellung der Formmassen und Folienherstellung:

Auf einer Chill-Roll-Anlage der Fa. Reifenhäuser mit einem Extruderdurchmesser von 90 mm, einer Extruderlänge von 2250 mm und zwei Chill-Roll-Walzen (Durchmesser der ersten Walze: 400 mm; Durchmesser der zweiten Walze 150 mm) wurden aus den Formmassen in den in Tabelle 1 angegebenen Mischungsverhältnissen bei einer Schmelzetemperatur von 175°C, einem Durchsatz von 38 kg/h, einer Ziehgeschwindigkeit von 15 m/min, bei der in Tabelle 1 angegebenen Walzentemperatur bei der Chill-Roll-Walzen und unter ansonsten jeweils gleichen Bedingungen nach dem Chill-Roll-Extrusionsverfahren Folien hergestellt. Tabelle 1 ist zu entnehmen, mit welcher Häufigkeit bei der Folienherstellung ein Verkleben der Formmassen mit den Chill-Roll-Walzen festzustellen war. Das Verkleben war daran zu erkennen, dass die Folie zu-nächst über den normalen Ablösepunkt hinaus an der ersten rotierenden Walze haften blieb und sich anschließend ruckartig löste (im Gegensatz dazu löste sich eine nicht verklebende Folie ohne zu ruckeln am immer gleichen Ablösepunkt von der ersten rotierenden Walze). Die in Tabelle 1, letzte Spalte wiedergegebene Häufigkeit des Verklebens entsprach der Anzahl der pro Minute visuell feststellbaren ruckartigen Ablösevorgänge der Folie von der ersten rotierenden Walze.

**Tabelle 1:**

| Versuche | Ecoflex® Menge in Gew.-% | Verzweigerbatch, Menge in Gew.-% | Walzentemperatur (°C) | Häufigkeit des Verklebens pro min |
|---|---|---|---|---|
| V1* | 100 | - | 50 | 60 |
| V2* | 100 | - | 70 | > 60 |
| 3 | 99,5 | B1, 0,5% | 50 | 0 |
| 4 | 99,5 | B1, 0,5% | 70 | 5 |
| 5 | 99,5 | B2, 0,5% | 50 | 0 |
| 6 | 99,5 | B2,0,5% | 70 | 7 |
| 7 | 99,5 | B3, 0,5% | 50 | 10 |
| 8 | 99,5 | B3, 0,5% | 70 | 22 |
| 9 | 99,5 | B4, 0,5% | 50 | 11 |
| 10 | 99,5 | B4, 0,5% | 70 | 25 |
| 11 | 99,5 | B5,0,5% | 50 | 13 |
| 12 | 99,5 | B5, 0,5% | 70 | 29 |
| V13* | 99,5 | VB6, 0,5% | 50 | 18 |
| V14* | 99,5 | VB6, 0,5% | 70 | 30 |
| V15* | 99,5 | VB7, 0,5% | 50 | 21 |
| V16* | 99,5 | VB7 0,5% | 70 | 35 |

| | | | | |
|---|---|---|---|---|
| * Vergleichsversuche, nicht erfindungsgemäß | | | | |

Die aus den erfindungsgemäßen Formmassen 3 bis 12 hergestellten Folien wiesen bei der Verarbeitung eine verringerte Klebneigung gegenüber den Werkzeugen auf und ermöglichten einen erhöhten Durchsatz bei der Verarbeitung im Vergleich zu den aus Formmassen 1, 2 und 13 bis 16 hergestellten Folien.

Eine besonders geringe Verklebungsneigung zeigten die aus den bevorzugten Polystermischungen 1 bis 6 hergestellten Folien. In diesen Beispielen kamen die Verzweigerbatches B1 oder B2 zum Einsatz.

## Patentansprüche

1. Polyestermischung, enthaltend
i) 95 bis 99,95 Gew.-%, bezogen auf das Gesamtgewicht der Komponenten i bis ii, mindestens eines biologisch abbaubaren Homo- oder Copolyester ausgewählt aus der Gruppe: Polylactid, Polycaprolacton, Polyhydroxyalkanoat und Polyester aus aliphatischen oder aliphatischen und aromatischen Dicarbonsäuren und aliphatischen Dihydroxyverbindung und
ii) 0,05 bis 5 Gew.-%, bezogen auf das Gesamtgewicht der Komponenten i bis ii, Biodiesel, wobei unter Biodiesel Ester von Fettsäuren und Pflazerölen verstanden werden.

2. Polyestermischung nach Anspruch 1, umfassend eine Komponente i, die sich wie folgt zusammensetzt:
ia) 90 bis 99,9 Gew.-%, bezogen auf Komponenten i, eines Polyester aus aliphatischen oder aliphatischen und aromatischen Dicarbonsäuren und aliphatischen Dihydroxyverbindungen und/oder eines Polylactids und
ib) 0,1 bis 10 Gew.-%, bezogen auf Komponenten i, eines Polyhydroxybutyrats.

3. Polyestermischung nach einem der Ansprüche 1 oder 2, wobei Komponente ia wie folgt aufgebaut ist:
A) einer Säurekomponente aus
a1) 30 bis 99 mol-% mindestens einer aliphatischen oder mindestens einer cycloaliphatischen Dicarbonsäure oder deren esterbildende Derivate oder Mischungen davon
a2) 1 bis 70 mol-% mindestens einer aromatischen Dicarbonsäure oder deren esterbildendem Derivat oder Mischungen davon und
a3) 0 bis 5 mol-% einer sulfonatgruppenhaltigen Verbindung,
wobei die Molprozente der Komponenten a1) bis a3) zusammen 100% ergeben und
B) einer Diolkomponente aus mindestens einem C₂-bis C₁₂-Alkandiol oder einem C₅- bis C₁₀-Cycloalkandiol oder Mischungen davon
und gewünschtenfalls darüber hinaus eine oder mehrere Komponenten ausgewählt aus
C) einer Komponente ausgewählt aus
c1) mindestens einer Etherfunktionen enthaltenden Dihydroxyverbindung der Formel I
HO-[(CH₂)ₙ-O]ₘ-H (I)
in der n für 2, 3 oder 4 und m für eine ganze Zahl von 2 bis 250 stehen,
c2) mindestens einer Hydroxycarbonsäure der Formel IIa oder IIb 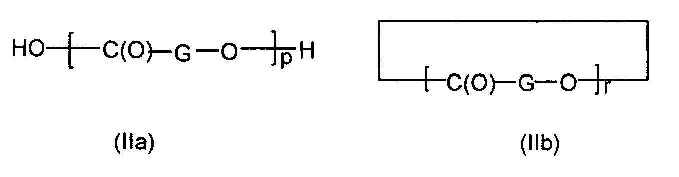 in der p eine ganze Zahl von 1 bis 1500 und r eine ganze Zahl von 1 bis 4 bedeuten, und G für einen Rest steht, der ausgewählt ist aus der Gruppe bestehend aus Phenylen, -(CH₂)_{q}-, wobei q eine ganze Zahl von 1 bis 5 bedeutet, -C(R)H- und -C(R)HCH₂, wobei R für Methyl oder Ethyl steht
c3) mindestens einem Amino-C₂- bis C₁₂-alkanol oder mindestens einem Amino-C₅-bis C₁₀-cycloalkanol oder Mischungen davon
c4) mindestens einem Diamino-C₁- bis C₈-Alkan
c5) mindestens einem 2,2'-Bisoxazolins der allgemeinen Formel III 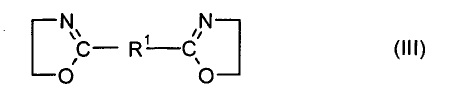 wobei R¹ eine Einfachbindung, eine (CH₂)_{z}-Alkylengruppe, mit z = 2, 3 oder 4, oder eine Phenylengruppe bedeutet
c6) mindestens einer Aminocarbonsäure ausgewählt aus der Gruppe, bestehend aus den natürlichen Aminosäuren, Polyamiden, erhältlich durch Polykondensation einer Dicarbonsäure mit 4 bis 6 C-Atomen und einem Diamin mit 4 bis 10 C-Atomen, Verbindungen der Formeln IV a und IVb 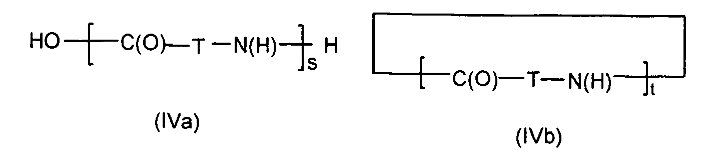 in der s eine ganze Zahl von 1 bis 1500 und t eine ganze Zahl von 1 bis 4 bedeuten, und T für einen Rest steht, der ausgewählt ist aus der Gruppe bestehend aus Phenylen, -(CH₂)ᵤ-, wobei u eine ganze Zahl von 1 bis 12 bedeutet, -C(R²)H- und -C(R²)HCH₂, wobei R² für Methyl oder Ethyl steht,
und Polyoxazolinen mit der wiederkehrenden Einheit V 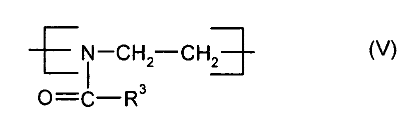 in der R³ für Wasserstoff, C₁-C₆-Alkyl, C₅-C₈-Cycloalkyl, unsubstituierten oder mit C₁-C₄-Alkylgruppen bis zu dreifach substituiertes Phenyl oder für Tetrahydrofuryl steht,
oder Mischungen aus c1) bis c6)
und
D) einer Komponente ausgewählt aus
d1) mindestens einer Verbindung mit mindestens drei zur Esterbildung befähigten Gruppen,
d2) mindestens eines Isocyanates
d3) mindestens eines Divinylethers
oder Mischungen aus d1) bis d3).

4. Polyestermischung nach Anspruch 3, wobei in Komponente ia:
• die aliphatische oder cycloaliphatische Dicarbonsäure (Komponente a1)) Bernsteinsäure, Adipinsäure oder Sebacinsäure, deren Ester bildende Derivate oder Mischungen davon bedeutet;
• die aromatische Dicarbonsäure (Komponente a2)) Terephthalsäure oder deren Ester bildende Derivate bedeutet, und
• die Diolkomponente (Komponente B) 1,4-Butandiol oder 1,3-Propandiol bedeutet.

5. Polyestermischung nach den Ansprüchen 1 bis 4, wobei zusätzlich eine Komponente iii, ein Epoxidgruppen-haltiges Copolymers auf Basis Styrol, Acrylsäureester und/oder Methacrylsäureester eingesetzt wird.

6. Biologisch abbaubare Polyestermischung nach Anspruch 3, wobei Komponente ia eine kontinuierliche oder kokontinuierliche Phase ausbildet.

7. Verfahren zur Herstellung von biologisch abbaubaren Polyestermischungen gemäß den Ansprüchen 1 bis 6 **dadurch gekennzeichnet, dass** die Komponenten i, ii und gegebenenfalls iii in einem Schritt gemischt und zur Reaktion gebracht werden.

8. Verfahren zur Herstellung von biologisch abbaubaren Polyestermischungen gemäß den Ansprüchen 2 bis 4, **dadurch gekennzeichnet, dass** in einem ersten Schritt 20 bis 55 Gew.-% Komponente ia mit 20 bis 55 Gew.-% Komponente ib und 15 bis 25 Gew.-% Komponente ii zu einem Masterbatch bei Temperaturen im Bereich von 110 bis 145°C gemischt werden und, in einem zweiten Schritt, diesem Masterbatch Komponente ia bzw. ib zugemischt werden und die erhaltene Mischung aus den Komponenten i, ii und iii bei Temperaturen von 130 bis 200°C zur Reaktion gebracht wird.

9. Verzweigerbatch, enthaltend
a) 25 bis 55 Gew.-% Komponente ia, definiert wie in den Ansprüchen 2 bis 4 und
b) 25 bis 55 Gew.-% Komponente ib, definiert wie in Anspruch 2 bis 4 und
c) 15 bis 25 Gew.-% Komponente ii, definiert wie in Anspruch 1.

10. Verwendung der biologisch abbaubaren Polyestermischungen gemäß den Ansprüchen 1 bis 6 zur Herstellung von Formteilen, Folien oder Fasern.

## Claims

1. A polyester mixture, comprising
i) from 95 to 99.95% by weight, based on the total weight of components i to ii, of at least one biodegradable homo- or copolyester selected from the following group: polylactide, polycaprolactone, polyhydroxyalkanoate, and polyester composed of aliphatic or aliphatic and aromatic dicarboxylic acids and of aliphatic dihydroxy compounds, and
ii) from 0.05 to 5% by weight, based on the total weight of components i to ii, of biodiesel, where Biodiesel means esters of fatty acids and of vegetable oils.

2. The polyester mixture according to claim 1, comprising a component i whose composition is as follows:
ia) from 90 to 99.9% by weight, based on components i, of a polylactide and/or of a polyester composed of aliphatic or aliphatic and aromatic dicarboxylic acids and of aliphatic dihydroxy compounds, and
ib) from 0.1 to 10% by weight, based on components i, of a polyhydroxybutyrate.

3. The polyester mixture according to claim 1 or 2, where component ia is composed of the following:
A) an acid component composed of
a1) from 30 to 99 mol% of at least one aliphatic, or at least one cycloaliphatic, dicarboxylic acid, or its esther-forming derivatives, or a mixture of these,
a2) from 1 to 70 mol% of at least one aromatic dicarboxylic acid, or its ester-forming derivative, or a mixture of these, and
a3) from 0 to 5 mol% of a compound comprising sulfonate groups,
where the sum of the molar percentages of components a1) to a3) is 100% and
B) a diol component selected from at least one C₂-C₁₂ alkanediol or from at least one C₅-C₁₀ cycloalkanediol, or a mixture of these,
and, if desired, also one or more components selected from
C) a component selected from
c1) at least one dihydroxy compound comprising ether functions and having the formula I
HO-[(CH₂)ₙ-O]ₘ-H (I)
where n is 2, 3 or 4 and m is a whole number from 2 to 250,
c2) at least one hydroxycarboxylic acid of the formula IIa or IIb 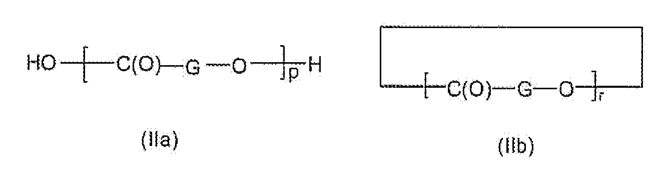 where p is a whole number from 1 to 1500 and r is a whole number from 1 to 4, and G is a radical selected from the group consisting of phenylene, -(CH₂)_{q}-, where q is a whole number from 1 to 5, -C(R)H-, and -C(R)HCH₂, where R is methyl or ethyl,
c3) at least one amino-C₂-C₁₂ alkanol, or at least one amino-C₅-C₁₀ cycloalkanol, or a mixture of these,
c4) at least one diamino-C₁-C₈ alkane,
c5) at least one 2,2' - bisoxazoline of the general formula III 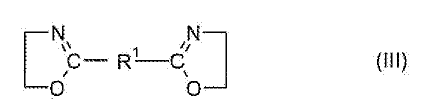 where R¹ is a single bond, a (CH₂)_{z}-alkylene group, where z = 2, 3 or 4, or a phenylene group, and
c6) at least one aminocarboxylic acid selected from the group consisting of the naturally occurring amino acids, polyamides obtainable by polycondensing a dicarboxylic acid having from 4 to 6 carbon atoms with a diamine having from 4 to 10 carbon atoms, compounds of the formulae IVa and IVb 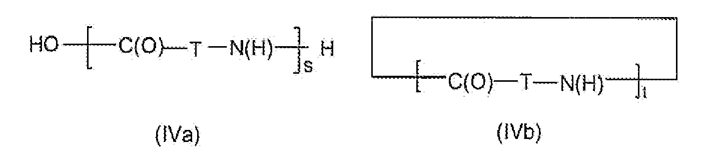 where s is a whole number from 1 to 1500 and t is a whole number from 1 to 4, and T is a radical selected from the group consisting of phenylene, -(CH₂)ᵤ-, where u is a whole number from 1 to 12, -C(R²)H-, and -C(R²)HCH₂-, where R² is methyl or ethyl,
and polyoxazolines having the repeat unit V 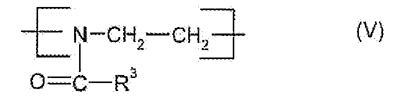 where R³ is hydrogen, C₁- C₆- alkyl, C₅- C₈- cycloalkyl, phenyl, either unsubstituted or with up to three C₁- C₄- alkyl substituents, or tetrahydrofuryl,
or a mixture composed of c1) to c6),
and
D) a component selected from
d1) at least one compound having at least three groups capable of ester formation,
d2) at least one isocyanate, and
d3) at least one divinyl ether,
or a mixture composed of d1) to d3).

4. The polyester mixture according to claim 3, where, in component ia:
• the aliphatic or cycloaliphatic dicarboxylic acid (component a1)) is succinic acid, adipic acid, or sebacic acid, ester-forming derivatives thereof, or a mixture of these;
• the aromatic dicarboxylic acid (component a2)) is terephthalic acid or ester-forming derivatives thereof, and
• the diol component (component B) is 1,4-butanediol or 1,3-propanediol.

5. The polyester mixture according to claims 1 to 4, where a component iii is also used, being a copolymer which contains epoxide groups and which is based on styrene, acrylate, and/or methacrylate.

6. A biodegradable polyester mixture according to claim 3, where component ia forms a continuous or cocontinuous phase.

7. A process for the production of biodegradable polyester mixtures according to claims 1 to 6, which comprises, in one step, mixing components i, ii, and optionally iii, and reacting them.

8. A process for the production of biodegradable polyester mixtures according to claims 2 to 4, which comprises, in a first step, mixing from 20 to 55% by weight of component ia with from 20 to 55% by weight of component ib and from 15 to 25% by weight of component ii to give a masterbatch, at temperatures in the range from 110 to 145°C, and, in a second step, admixing component ia and, respectively, ib with said Masterbatch and reacting the resultant mixture composed of components i, ii, and iii, at temperatures of from 130 to 200°C.

9. A branching-agent masterbatch, comprising
a) from 25 to 55% by weight of component ia, defined as in claims 2 to 4, and
b) from 25 to 55% by weight of component ib, defined as in any of claims 2 to 4, and
c) from 15 to 25% by weight of component ii, defined as in claim 1.

10. The use of the biodegradable polyester mixtures according to claims 1 two 6 for the production of moldings, foils, or fibers.

## Revendications

1. Mélange de polyesters, contenant
i) 95 à 99,95 % en poids, par rapport au poids total des composants i) et ii), d'au moins un homo- ou copolyester biologiquement dégradable, choisi dans le groupe : polylactide, polycaprolactone, polyhydroxyalcanoate et polyester à base d'acides dicarboxyliques aliphatiques ou aliphatiques et aromatiques et des composés dihydroxylés aliphatiques et
ii) 0,05 à 5 % en poids, par rapport au poids total des composants i) et ii) , de biogazole, en entendant par biogazole des esters d'acides gras et d'huiles végétales.

2. Mélange de polyesters selon la revendication 1, comprenant un composant i, qui se compose comme suit ;
ia) 90 à 99,9 % en poids, par rapport au composant i), d'un polyester à base d'acides dicarboxyliques aliphatiques ou aliphatiques et aromatiques et de composés dihydroxylés aliphatiques et/ou d'un polylactide et
ib) 0,1 à 10 % en poids, par rapport au composant i), d'un polyhydroxybutyrate.

3. Mélange de polyesters selon la revendication 1 ou 2, dans lequel le composant ia est constitué comme suit :
A) d'un composant acide constitué
a1) de 30 à 99 % en moles d'au moins un acide dicarboxylique aliphatique ou d'au moins un acide dicarboxylique cycloaliphatique ou de leurs dérivés formant des esters ou de mélanges de ceux-ci
a2) de 1 à 70 % en moles d'au moins un acide dicarboxylique aromatique ou d'un dérivé d'un tel acide formant des esters ou de mélanges de ceux-ci et
a3) de 0 à 5 % en moles d'un composé contenant des groupes sulfonate,
le pourcentage en moles des composants a1) à a3) ensemble étant égal à 100 % et
B) d'un composant diol à base d'au moins un alcanediol en C₂₋C₁₂ ou d'un cycloalcanediol en C₅-C₁₀ ou de mélanges de ceux-ci
et si on le désire en outre d'un ou plusieurs composants choisis parmi
C) un composant choisi parmi
c1) au moins un composé dihydroxylé contenant des fonctions éther, de formule I
HO-[(CH₂)ₙ-O]ₘ-H (I)
dans laquelle n représente 2, 3 ou 4 et m représente un nombre entier valant de 2 à 250,
c2) au moins un acide hydroxycarboxylique de formule IIa ou IIb 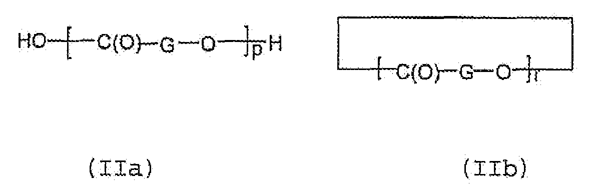 formules dans lesquelles p représente un nombre entier valant de 1 à 1500 et r représente un nombre entier valant de 1 à 4, et G représente un radical qui est choisi dans l'ensemble constitué par les groupes phénylène, -(CH₂)_{q}-, q représentant un nombre entier valant de 1 à 5, -C(R)H- et -C(R)HCH₂, R représentant le groupe méthyle ou éthyle
c3) au moins un amino-alcanol en C₂-C₁₂ ou au moins un amino-cycloalcanol en C₅-C₁₀ ou des mélanges de ceux-ci
c4) au moins un diamino-alcane en C₁-C₈
c5) au moins une 2,2'-bisoxazoline de formule générale III 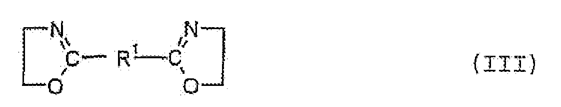 dans laquelle R¹ représente une liaison simple, un groupe (CH₂)_{z}-alkylène, où z = 2, 3 ou 4, ou un groupe phénylène
c6) au moins un acide aminocarboxylique choisi dans le groupe constitué par les acides aminés naturels, les polyamides, pouvant être obtenu par polycondensation d'un acide dicarboxylique ayant de 4 à 6 atomes de carbone et d'une diamine ayant de 4 à 10 atomes de carbone, des composés de formules IVa et IVb 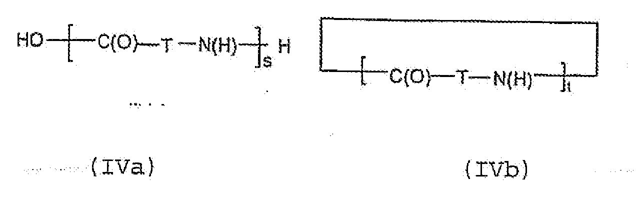 dans lesquelles s représente un nombre entier valant de 1 à 1500 et t représente un nombre entier valant de 1 à 4, et T représente und radical qui est choisi dans l'ensemble constitué par les groupes phénylène, -(CH₂)ᵤ-, u représentant un nombre entier valant de 1 à 12, -C(R²)H- et -C(R²)HCH₂, R² représentant le groupe méthyle ou éthyle,
et des polyoxazolines comportant le motif répétitif V 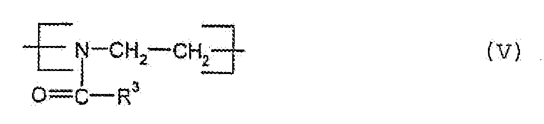 dans lequel R³ représente un atome d'hydrogène, un groupe alkyle en C₁-C₆, cycloalkyle en C₅-C₈, un groupe phényle non substitué ou jusqu'à trois fois substitué par des groupes alkyle en C₁-C₄ ou représente le groupe tétrahydrofuryle,
ou des mélanges de c1) à c6)
et
D) un composant choisi parmi
d1) au moins un composé comportant au moins trois groupes aptes à la formation d'esters,
d2) au moins un isocyanate
d3) au moins un éther divinylique
ou des mélanges de d1) à d3).

4. Mélange de polyesters selon la revendication 3, dans lequel, dans le composant ia :
• l'acide dicarboxylique aliphatique ou cycloaliphatique (composant a1)) représente l'acide succinique, l'acide adipique ou l'acide sébacique, leurs dérivés formant des esters ou des mélanges de ceux-ci ;
• l'acide dicarboxylique aromatique (composant a2)) représente l'acide téréphtalique ou ses dérivés formant des esters, et
• le composant diol (composant B) représente le 1,4-butanediol ou le 1,3-propaned.iol,

5. Mélange de polyesters selon les revendications 1 à 4, dans lequel on utilise en outre un composant iii, un copolymère contenant des groupes époxy, à base de styrène, ester d'acide acrylique et/ou ester d'acide méthacrylique.

6. Mélange de polyesters biologiquement dégradable selon la revendication 3, dans lequel le composant ia forme une phase continue ou co-continue.

7. Procédé pour la préparation de mélanges de polyesters biologiquement dégradables selon les revendications 1 à 6, **caractérisé en ce que** dans une étape on mélange les composant i, ii et éventuellement iii et on les met en réaction.

8. Procédé pour la préparation de mélanges de polyesters biologiquement dégradables selon les revendications 2 à 4, **caractérisé en ce que** dans une première étape on mélange, à des températures dans la plage de 110 à 145 °C, 20 à 55 % en poids de composant ia avec 20 à 55 % en poids de composant ib et 15 à 25 % en poids de composant ii, pour obtenir un mélange-maître et, dans une deuxième étape, on incorpore ia ou ib à ce mélange-maître et on met en réaction le mélange obtenu, à base des composants i, ii et iii, à des températures de 130 à 200 °C.

9. Mélange dérivé, contenant
a) 25 à 55 % en poids de composant ia, défini comme dans les revendications 2 à 4 et
b) 25 à 55 % en poids de composant ib, défini comme dans les revendications 2 à 4 et
c) 15 à 25 % en poids de composant ii, défini comme dans la revendication 1.

10. Utilisation des mélanges de polyesters biologiquement dégradables selon les revendications 1 à 6, pour la production de pièces moulées, de films ou de fibres.
